# EUROPÄISCHE PATENTSCHRIFT

(11) **EP 0 918 968 B1**
(45) Veröffentlichungstag und Bekanntmachung des Hinweises auf die Patenterteilung: **14.11.2001**
(21) Anmeldenummer: 97941929.8
(22) Anmeldetag: 09.08.1997
(51) Int. Cl.: F16L 13/00

(54) **KUPPLUNGSVORRICHTUNG FÜR DIE HERSTELLUNG EINER ROHRVERBINDUNG**
COUPLING DEVICE FOR JOINING PIPES
DISPOSITIF D'ACCOUPLEMENT POUR REALISER UN RACCORD DE TUYAUX

(30) Priorität: 21.08.1996 DE 19633627
(43) Veröffentlichungstag der Anmeldung: 02.06.1999
(73) Patentinhaber: Dischler, Helmut, Dipl.-Ing., D-41464 Neuss (DE)
(72) Erfinder: Dischler, Helmut, Dipl.-Ing., D-41464 Neuss (DE)
(74) Vertreter: Paul, Dieter-Alfred, Dipl.-Ing.
(86) Internationale Anmeldenummer: EP9704349
(87) Internationale Veröffentlichungsnummer: WO9808017

(56) Entgegenhaltungen:
- WO-A-94/24475
- DE-C- 807 575
- FR-A- 2 450 990
- GB-A- 1 213 786

## Beschreibung

Die Erfindung betrifft eine Rohranordnung mit zwei endseitig durch eine Kupplungsvorrichtung verbunden Rohren.

Zum Verbinden von Rohren ist es bekannt, hülsenförmige Preßfittings zu verwenden, die zum Zwecke der Herstellung einer Rohrverbindung über die Rohrenden geschoben und dann radial zusammengepreßt werden, wobei sowohl das Preßfitting als auch das Rohr plastisch verformt werden. Solche Rohrverbindungen und die zugehörigen Preßfittings sind beispielsweise in der DE-C-11 87 870 und der EP-B-0 361 630 beschrieben.

Aus der DE-A-33 10 027 ist ferner bekannt, die Rohrenden mit konischen Einformungen zu versehen, um durch die auftretende Keilwirkung die Haltekräfte zu erhöhen.

Des weiteren werden spezielle Kupplungsvorrichtungen verwendet, bei denen die beiden Rohrenden in Ringräumen eingeklemmt werden, die zwischen einer innenliegenden Traghülse und einer diese umgebenden außenliegenden Preßhülse aus Metall gebildet sind. Dabei erfolgt die Fixierung der Rohrenden in der Kupplungsvorrichtung, indem die Preßhülse unter plastischer Verformung und unter Verklemmung der Rohrenden zwischen Preßhülse und Traghülse radial nach innen verpreßt wird.

Dabei ist es möglich, jedem Rohrende eine eigene Preßhülse zuzuordnen, wie dies aus der DE-U 90 16 310 bekannt ist, oder eine einzige, durchgehende Preßhülse zu verwenden, wie dies in der EP-A-0 582 543 vorgeschlagen wird.

Die bekannten Kupplungsvorrichtungen haben sich in der Praxis durchaus bewährt. Ihr Einsatz ist jedoch oftmals problematisch, wenn sie im Betrieb starken Temperaturschwankungen ausgesetzt sind, da dann auf die Verbindung durch die temperaturbedingten Ausdehnungen von Rohr und Kupplungsvorrichtung starke Kräfte wirken. Bei Kupplungsvorrichtungen, die zur Verbindung von Kunststoffrohren in Warmwasserleitungen verwendet werden, wechselt beispielsweise die Betriebstemperatur im Bereich von 20 bis 100°C, und bei derartigen Temperaturänderungen treten in den Rohren Längenänderungen von etwa 20 mm pro Meter Rohrlänge auf. Die aus Metall bestehenden Kupplungsvorrichtungen dehnen sich im Vergleich nur sehr wenig aus, so daß die Verbindung starken Zwangskräften ausgesetzt ist, die dazu führen können, daß die Rohrenden in der Kupplungsvorrichtung rutschen und die Verbindung undicht wird.

Um dieser Problematik zu begegnen wird in der GB-A-1 213 786 vorgeschlagen, die Rohre mit balgartigen Bereichen zu versehen, welche die Längenänderungen des Rohrs aufnehmen und somit die Verbindungsstelle entlasten sollen. Des weiteren ist in dem zwischen zwei ineinandergesteckten Rohrenden gebildeten Ringraum ein Dichtungselement vorgesehen, welches in der Lage ist, radiale Dehnungen zumindest zum Teil auszugleichen. Mit dieser Ausführungsform können thermische Dehnungen zwar zum Teil ausgeglichen werden. Dies wird jedoch mit dem Nachteil erkauft, daß die Rohre in Anpassung an die auftretenden Temperaturunterschiede sowie die Rohrgesamtlänge, durch welche die auftretenden Dehnungen bestimmt werden, unterschiedliche Balgbereiche besitzen müssen. Mit anderen Worten ist eine große Rohrvielfalt erforderlich, was mit einem hohen Aufwand verbunden ist.

Aufgabe der Erfindung ist es daher, eine Rohranordnung zu schaffen, die auf einfache Weise eine sichere und dichte Verbindung von zwei Rohrenden auch bei hohen Temperaturschwankungen gewährleistet.

Diese Aufgabe wird erfindungsgemäß im wesentlichen gelöst durch eine Rohranordnung mit wenigstens zwei endseitig durch eine Kupplungsvorrichtung verbundenen Rohren, wobei die Kupplungsvorrichtung wenigstens eine auf ein Rohrende aufgesteckte und mit dem Rohrende verpreßte Preßhülse aufweist und zwischen Preßhülse und Rohrende ein elastischer Bereich vorgesehen ist, der eine solche Elastizität besitzt und so ausgebildet ist, daß im Betrieb auftretende thermische Axial- und Radialdehnungen des Rohrendes durch elastische Verformung des elastischen Bereichs ohne ein Rutschen des Rohrendes in der Preßhülse aufgenommen werden.

Bei dieser Rohranordnung werden somit durch Temperaturänderungen oder sonstige Belastungen entstehende Dehnungen der Rohre vom elastischen Bereich aufgenommen, der so elastisch ausgebildet ist, daß er sich der auftretenden Rohrdehnung entsprechend deformieren kann, ohne daß die Kraftschlußverbindung zwischen Preßhülse und dem jeweiligen Rohrende beeinträchtigt wird. Dabei ist der elastische Bereich so ausgebildet, daß sowohl Dickenänderungen als auch Längenänderungen des in die Kupplungsvorrichtung eingepreßten Rohrendes aufgenommen werden können.

Zweckmäßigerweise ist der elastische Bereich so ausgebildet, daß die Zug- und Schubelastizität in Richtung des freien Endes der Preßhülse zunehmen. Durch diese Maßnahme entspricht das Verformungsverhalten des elastischen Bereichs dem Längsdehnungsverhalten eines in der Kupplungsvorrichtung gehaltenen Rohrs, da sich dieses im Bereich des freien Endes der Preßhülse am stärksten und an seinem in die Preßhülse eingesteckten axialen Ende praktisch praktisch gar nicht mehr dehnt, weil die Längskräfte bis dahin bereits aufgenommen sind.

Zur Erzielung einer solchen zunehmenden Schubelastizität können in der dem Rohrende zugewandten Fläche des elastischen Bereichs sich in Umfangsrichtung erstreckende Einschnitte bzw. Rillen vorgesehen sein, deren Tiefe und/oder Breite in Richtung des freien Endes der Preßhülse zunimmt.

Gemäß einer Ausführungsform einer erfindungsgemäßen Rohranordnung wird die Preßhülse durch eine plastisch verformbare Außenhülse, die beispielsweise aus Metall bestehen kann, und eine in der Außenhülse gehaltenes, elastisch verformbares Ringelement gebildet, das nachfolgend mit Innenhülse bezeichnet wird, obwohl es nicht die Steifigkeit einer Hülse in herkömmlichem Sinn aufweist. Die Innenhülse besteht zweckmäßigerweise wie die Rohre aus Kunststoff. Hierdurch wird gewährleistet, daß sich das Rohrende und die Innenhülse etwa in gleichem Maß verformen.

In weiterer Ausbildung der Erfindung können die Außenhülse und die Innenhülse auch konisch ausgebildet sein, so daß die Innenhülse vom freien Ende der Preßhülse her in die Außenhülse eingeschoben werden kann, und kann die Innenhülse zusätzlich unter elastischer Verformung eines Federelements in die Außenhülse hineingedrückt werden, um die erforderliche Verpressung zwischen Preßhülse und Rohrende zu erzeugen. Hierdurch wird eine lösbare Verbindung geschaffen, da die Außenhülse nicht plastisch verformt zu werden braucht.

Die Innenhülse kann auch von einer Mehrzahl von axial aneinander anschließenden und getrennt voneinander vorgesehenen Innenhülsenelementen gebildet sein. Dann haben die Innenhülsenelemente zweckmäßigerweise einen T- oder L-förmigen Querschnitt, so daß bei axialer Aneinanderreihung zum Rohrende offene Einschnitte gebildet werden. Die einzelnen Innenhülsenelemente können beispielsweise aus Metall bestehen.

Gemäß einer weiteren Ausführungsform besteht die Preßhülse aus einem elastisch verformbaren Kunststoffkörper mit darin eingebetteten, plastisch verformbaren Fasern oder Ringelementen aus Metall oder Kunststoff. In diesem Fall kann die Preßhülse als Spritzgußteil ausgebildet sein, so daß ihre Herstellung einfach ist. Dabei wird durch den Kunststoff die gewünschte Elastizität der Preßhülse erreicht, während durch die Fasern bzw. Ringe die Fixierung eines Rohrendes erfolgt, indem sie unter plastischer Verformung nach innen gedrückt werden, wodurch Rohrende und Preßhülse miteinander verpreßt werden.

Bei dieser Ausführungsform kann die gewünschte Zunahme der Längs- bzw. Schubelastizität in Richtung des freien Endes der Preßhülse erreicht werden, indem die Preßhülse eine in Richtung ihres freien Endes geringer werdende Wandstärke hat. Alternativ oder zusätzlich können auch hier in der Innenfläche der Preßhülse Einschnitte zur Erhöhung der Elastizität vorgesehen sein.

In an sich bekannter Weise kann innerhalb der Preßhülse eine Traghülse vorgesehen sein, die mit der Preßhülse eine Ringaufnahme für ein Rohrende bildet. Die Traghülse kann ebenfalls im Bereich ihrer am Rohrende in Anlage kommenden Außenfläche elastisch ausgebildet sein, um Dehnungen des Rohrendes durch elastische Verformung aufnehmen zu können. Beispielsweise können die Preßhülse und Traghülse einstückig als Kunststoffteil mit darin eingebetteten plastisch verformbaren Fasern oder Ringen hergestellt sein. Außerdem kann auch die Traghülse wie die Preßhülse eine in Richtung ihres freien Endes geringer werdende Wanddicke sowie an ihrer Außenfläche Einschnitte aufweisen.

In alternativer Weise kann die Preßhülse in ihrer Umfangsrichtung in mehrere Hülsenelemente unterteilt sein, die miteinander unter elastischer Vorspannung von Federelementen derart verbunden sind, daß sich die Preßhülse entgegen der Vorspannung der Federelemente radial aufweiten kann, und die in Axialrichtung federnd ausgebildet sind. Bei dieser Ausführungsform wird die gewünschte Elastizität zur Aufnahme von temperaturbedingten Dehnungen des Rohrendes durch die vorgesehenen Federelemente bzw. die federnde Ausbildung der Preßhülse erreicht. Zweckmäßigerweise werden dabei die Hülsenelemente durch Druckfederelemente elastisch zusammengedrückt und weisen in Axialrichtung elastisch zusammendrückbare und streckbare radiale Ausbauchungen auf.

Gemäß einer weiteren Ausführungsform besteht die Preßhülse aus einem elastisch verformbaren Material und hat einen Hohlraum, der zum Verpressen der Preßhülse mit einem Rohrende unter Aufweitung der Preßhülse mit Preßflüssigkeit befüllbar ist. Alternativ ist es möglich, in dem Hohlraum ein pulverförmiges Mittel vorzusehen, daß bei einer Erregung, insbesondere einer Entzündung oder Reaktion mit Wasser, unter Aufweitung der Preßhülse expandierend reagiert. Durch die Aufweitung der Preßhülse erfolgt hier die Verpressung zwischen Rohrende und Preßhülse. Dabei ist zweckmäßigerweise die Preßhülse von einer festen Verstärkungshülse umgeben, so daß eine Aufweitung der Preßhülse im wesentlichen radial nach innen in Richtung des zu fixierenden Rohrendes erfolgt.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt:
- Figur 1: in Schnittansicht eine erste erfindungsgemäße Rohranordnung mit einem Rohrende, die in der linken linken Hälfte in unverpreßtem und in der rechten Hälfte in verpreßtem Zustand dargestellt ist;
- Figur 2: die linke Hälfte einer zweiten Rohranordnung in verpreßtem Zustand;
- Figur 3: die linke Hälfte einer dritten Rohranordnung;
- Figur 4: eine vierten Rohranordnung im Querschnitt;
- Figur 5: die linke Hälfte der in Figur 4 gezeigten Rohranordnung im Längsschnitt;
- Figur 6: die linke Hälfte einer vierten Rohranordnung im Längsschnitt;
- Figur 7: die linke Hälfte einer sechsten Rohranordnung im Längsschnitt;
- Figur 8: die linke Hälfte einer siebten Ausführungsformeiner erfindungsgemäßen Rohranordnung im Längsschnitt und
- Figur 9: die linke Hälfte einer achten Ausführungsformeiner erfindungsgemäßen Rohranordnung im Längsschnitt.

Alle Darstellungen zeigen jeweils nur einen Verbindungsbereich zwischen einer Preßhülse und einem Rohrende von einer Rohranordnung. Der andere Verbindungsbereich zur Aufnahme eines zweiten Rohrendes ist hier identisch ausgebildet.

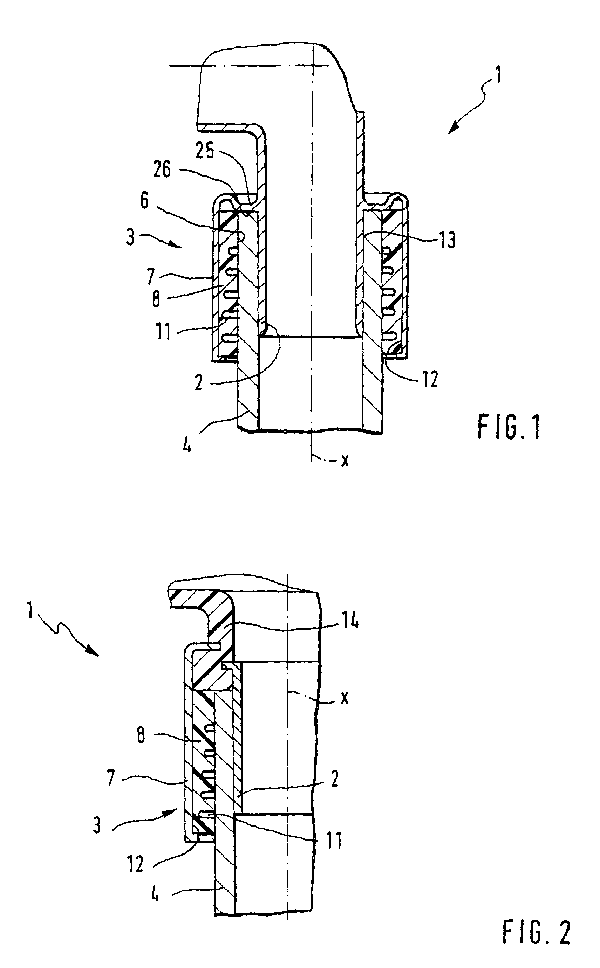

Die in Figur 1 dargestellte Rohranordnung umfaßt eine Kupplungsvorrichtung 1 mit einer im wesentlichen zylindrischen Traghülse 2 und einer ebenfalls im wesentlichen zylindrischen Preßhülse 3. In den zwischen Traghülse 2 und Preßhülse 3 gebildeten Ringraum 12 ist ein Rohrende 4 eingeschoben, das aus Kunststoff oder Metall bestehen kann.

Die Preßhülse 3 besteht aus einer plastisch verformbaren Außenhülse 7 und einer in der Außenhülse 7 gehaltenen Innenhülse 8.

Die Innenhülse 8 besteht aus einem Kunststoff, welcher derart elastisch verformbar ist, daß radiale Dehnungen des Rohrendes 4 aufgrund von Temperaturänderungen durch elastische Verformung der Innenhülse 8 und Längsdehnungen des Rohrendes 4 durch Schubverformung bzw. durch Längselastizität aufgenommen werden, ohne daß das Rohrende 4 in der Preßhülse 3 rutscht.

In ihrer am Rohrende 4 in Anlage kommenden Innenfläche 6 weist die Innenhülse 8 eine Mehrzahl von Einschnitten 11 auf, die in Achsrichtung X der Preßhülse 3 nebeneinanderliegen und sich über den gesamten Umfang der Preßhülse 3 erstrecken. Die Einschnitte 11 sind vorgesehen, um die Elastizität der Innenhülse 8 zu erhöhen und insbesondere Freiräume zu schaffen, in die das Kunststoffmaterial der Innenhülse 8 bei einer Verformung ausweichen kann. Die Tiefe und/oder Breite der Einschnitte 11 wird dabei vom zweckmäßigerweise axialen Ende des Rohrs 4 zum freien Ende der Preßhülse 3 zunehmend größer. Hierdurch wird erleichternd erreicht, daß die Schubelastizität der Innenhülse 8 am freien Ende der Preßhülse 3, wo die stärksten Längsdehnungen des Rohrendes 4 auftreten, am größten ist.

Die Außenhülse 7 ist mit der Traghülse 2 über einen Verbindungssteg 25 verbunden, der eine Anschlagfläche 26 für das Rohrende 4 und die Innenhülse 8 bildet und die auftretenden Rohrkräfte übertragen kann sowie mit zur Abdichtung beiträgt. Zur Fixierung des Rohrendes 4 in der Kupplungsvorrichtung 1 wird die in der linken Hälfte von Figur 1 dargestellte Preßhülse 3 unter plastischer Verformung ihrer Außenhülse 7 radial nach innen verpreßt, wobei die Innenhülse 8 unter Verkleinerung der Einschnitte 11 elastisch verformt wird, wie in der rechten Hälfte von Figur 1 gezeigt ist. Die hierdurch erzeugte Vorspannung der Innenhülse 8 sorgt für einen sicheren Halt des Rohrendes 4 in der Kupplungsvorrichtung 1.

Die Innenhülse kann auch von einer Mehrzahl von axial aneinander anschließenden und getrennt voneinander vorgesehenen Innenhülsenelementen gebildet sein. Dann haben die Innenhülsenelemente zweckmäßigerseise einen T- oder L-förmigen Querschnitt, so daß bei axialer Aneinanderreihung zum Rohrende offene Einschnitte gebildet werden. Die einzelnen Innenhülsenelemente können beispielsweise aus Metall bestehen.

Wenn im Betrieb beispielsweise heißes Wasser das Rohr 4 durchströmt, dehnt sich das Rohr 4 sowohl in seiner Länge als auch in seiner Dicke stark aus. Diese thermisch bedingten Dehnungen werden in der Kupplungsvorrichtung 1 durch eine elastische Verformung der Innenhülse 8 ausgeglichen, ohne daß das Rohrende 4 in der Kupplungsvorrichtung 1 rutscht.

Die in Figur 2 dargestellte Kupplungsvorrichtung 1 entspricht im wesentlichen der in Figur 1 dargestellten Kupplungsvorrichtung und umfaßt eine Traghülse 2 und eine Preßhülse 3, die zwischen sich einen Ringraum 12 bilden, in den ein Rohrende 4 eingeschoben ist. Die Preßhülse 3 besteht aus einer das Rohrende 4 umschließenden, elastisch verformbaren Innenhülse 8, die in ihrer am Rohrende 4 anliegenden Innenfläche 6 Einschnitte 11 aufweist, und einer die Innenhülse 8 umgebenden plastisch verformbaren Außenhülse 7 aus Metall.

Bei dieser Ausführungsform sind die Traghülse 2 und die Auβenhülse 7 als separate Bauteile ausgebildet, die an ihrem einen axialen Ende in einen Kupplungskörper 14 aus Kunststoff eingegossen sind.

Die Fixierung des Rohrendes 4 in der Kupplungsvorrichtung 1 erfolgt wie bei der in Figur 1 dargestellten Ausführungsform, indem die Außenhülse 7 unter plastischer Verformung über ihren ganzen Umfang radial nach innen gepreßt wird, so daß sich die Innenhülse 8 elastisch verformt, wodurch das Rohrende 4 unter Vorspannung zwischen Innenhülse 8 und Traghülse 2 eingeklemmt wird.

In alternativer Weise können Außenhülse 7 und/oder Traghülse 2 aus einem sogenannten Memory-Material, d.h. einer Legierung mit Formgedächnis, bestehen, das sich bei einer vorgegebenen Erwärmung derart bleibend aufweitet bzw. zusammenzieht, daß ein indem Ringraum 12 gestecktes Rohrende 4 zwischen den Hülsen 2, 7 unter elastischer Verformung der Innenhülse 8 eingeklemmt wird.

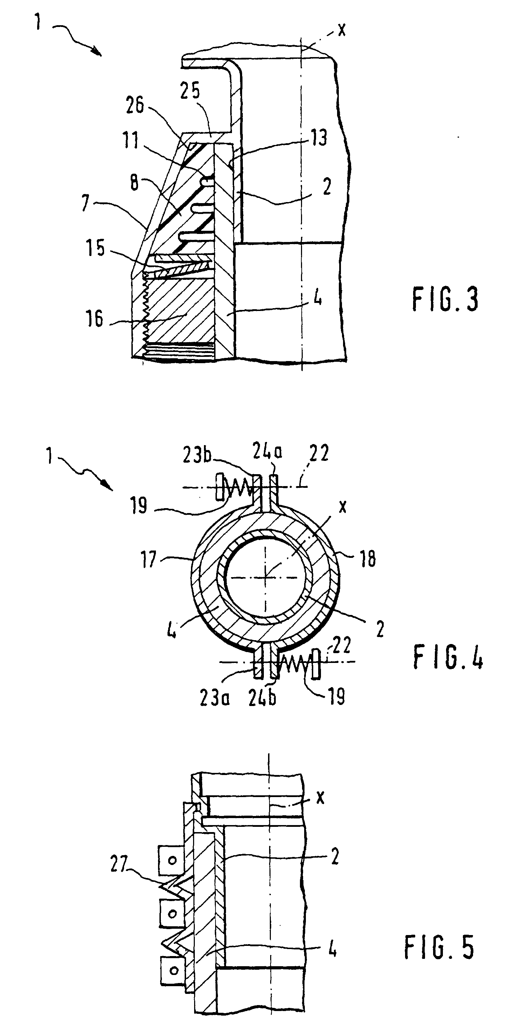

In Figur 3 ist eine dritte Rohranordnung mit einer Kupplungsvorrichtung 1 dargestellt. Bei dieser wird die Preßhülse 3 ebenfalls von einer mit der Traghülse 2 verbundenen Außenhülse 7 und einer zwischen Rohren und Außenhülse 7 eingeschobenen Innenhülse 8 gebildet. Die Außenhülse 7 und die Innenhülse 8 sind hier jeweils konusförmig ausgebildet, so daß die Innenhülse 8 keilartig in den zwischen Außenhülse 7 und Rohrende 4 gebildeten Ringraum unter elastischer Verformung vom freien Ende der Preßhülse 3 her einschiebbar ist. Dort wird sie durch ein in die Außenhülse 7 eingeschraubtes Halteelement 16 unter Zwischenschaltung eines sich zwischen Innenhülse 8 und Halteelement 16 abstützenden Druckfederelements 15 unter Vorspannung gehalten.

Durch das Federelement 15 sowie die beim Einschieben in die Außenhülse 7 erzeugte Verformung der Innenhülse 8 wird eine ausreichende Vorspannung erzeugt, um das Rohrende 4 sicher in der Kupplungsvorrichtung 1 zu halten. Diese Anordnung hat den Vorteil, daß die Verbindung zwischen Kupplungsvorrichtung 1 und Rohrende 2 wieder gelöst werden kann, indem das Halteelement 16 aus der Außenhülse 7 herausgeschraubt wird.

Die Innenhülse 8 ist an ihrer am Rohrende 4 anliegenden Innenfläche 6 wieder mit Einschnitten 11 versehen, um bei Längskräften im Rohr die Rohrdehnung schlupflos abzubauen und Ausweichräume für größere Wärmedehnungen von Kunststoff gegenüber Metall zu schaffen.

Der Ausgleich von thermischen Dehnungen des Rohrendes 4 erfolgt hier in der gleichen Weise wie bei den vorbeschriebenen Ausführungsbeispielen, d.h. durch elastische Verformung der Innenhülse 8.

Die in den Figuren 4 und 5 dargestellte Kupplungsvorrichtung einer erfindungsgemäßen Rohranordnung hat eine Traghülse 2 und eine Preßhülse 3, die zwischen sich einen Ringraum 12 bilden, in den ein Rohrende 4 eingeschoben ist. Die Preßhülse 3 ist hier in Umfangsrichtung unterteilt in zwei oder mehr Hülsenelemente 17, 18, die das Rohrende 4 umgreifen und an ihren einander zugewandten Stirnseiten jeweils unter elastischer Vorspannung von Druckfederelementen 19 derart verbunden sind, daß sich die Preßhülse 3 entgegen der Vorspannung der Druckfederlemente 19 radial aufweiten kann.

Zur Herstellung dieser Verbindung sind an den einander zugewandten Seiten der Hülsenelemente 17, 18 jeweils einander zugeordnete radiale Stege 23a, 23b, 24a, 24b vorgesehen. Ein Halteelement 22 durchgreift jeweils einen ersten der beiden Stege 23a, 24a und ist an dem zweiten Steg 23b, 24b befestigt, beispielsweise eingeschraubt, wobei zwischen dem ersten Steg 23a, 24a und dem Halteelement 22 das Druckfederelement 19 vorgesehen ist, welche die beiden Hülsenelemente 17, 18 zusammendrückt.

Die Hülsenelemente 17, 18 sind auch, wie insbesondere in Figur 5 erkennbar ist, in axialer Richtung X des Rohrs 4 federnd ausgebildet, um Längsdehnungen des Rohrendes 4 ausgleichen zu können, wozu sie mehrere mit axialem Abstand zueinander angeordnete, tellerfederartig ausgebildete radiale Ausbauchungen 27 aufweisen.

Wenn im Betrieb thermische Dehnungen in Rohrende 4 auftreten, werden Dickenänderungen des Rohrendes 4 ausgeglichen, indem die Hülsenelemente 17, 18 entgegen der Federkraft des Federelements 19 auseinandergedrückt werden, und Längsdehnungen werden ausgeglichen, indem die Ausbauchungen 27 gestreckt oder gestaucht werden.

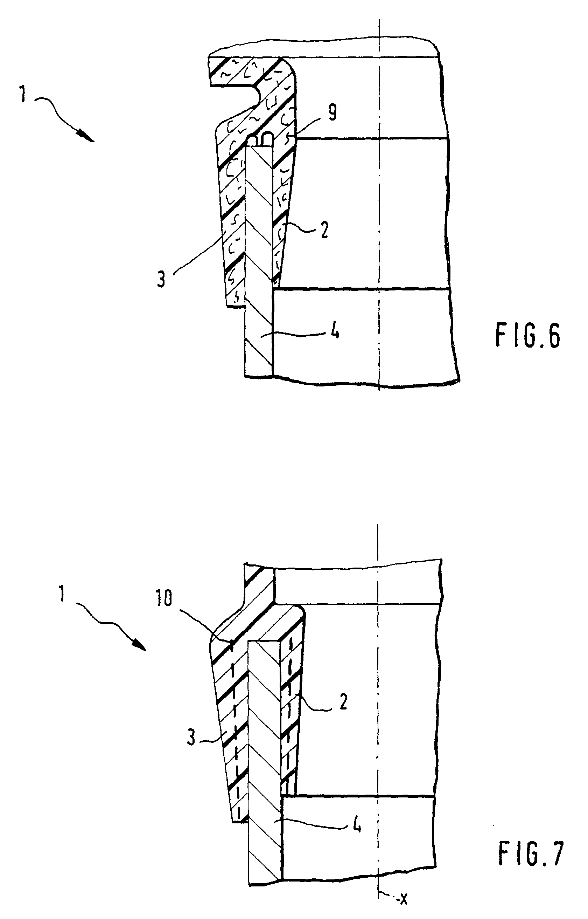

Die Figuren 6 und 7 zeigen zwei weitere Rohranordnungen, bei denen die Traghülse 2 und die Preßhülse 3 der Kupplungsvorrichtung 1 jeweils einstückig als Spritzgußteile ausgebildet sind. Als Material für die Spritzgußteile wird hier ein elastisch verformbarer Kunststoff gewählt, in den plastisch verformbare Fasern 9 oder Ringelemente 10 eingebettet sind.

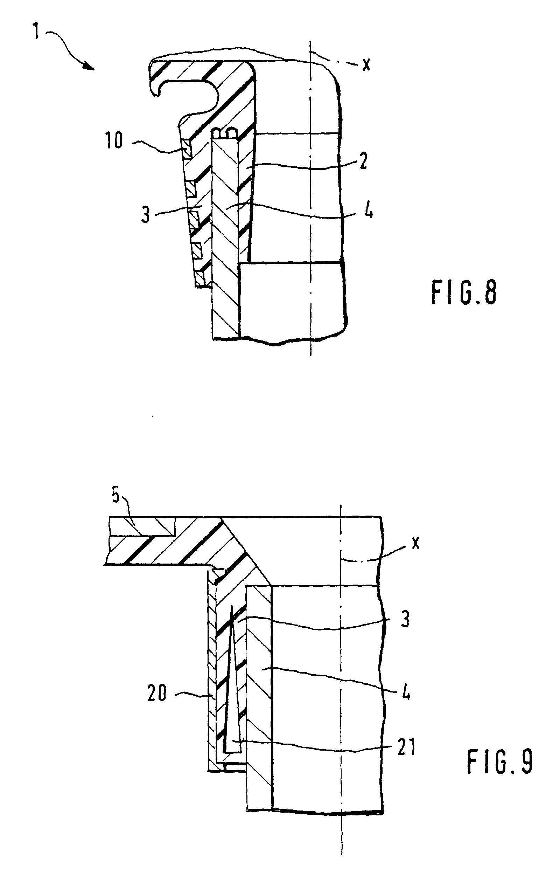

Alternativ können wie bei der in Figur 8 dargestellten Ausführungsform Ringelemente 10 außenseitig die Preßhülse 3 umgeben bzw. in sie eingelegt sein.

Bei den in den Figuren 6 bis 8 dargestellten Kupplungsvorrichtungen wird zur Fixierung des Rohrendes 4 die außenliegende Preßhülse 3 unter elastischer Verformung des Kunststoffmaterials und plastischer Verformung der Fasern 9 bzw. Ringelemente 10 radial nach innen gedrückt, wodurch Preßhülse 3 und Rohrende 4 miteinander verpreßt werden.

Um zu erreichen, daß die Preßhülse 3 und die Traghülse 2 in gewünschter Weise eine Schubelastizität besitzen, die in Richtung ihrer freien Enden zunimmt, besitzen Traghülse 2 und Preßhülse eine in Richtung ihrer freien Enden geringer werdende Wandstärke.

Auch bei den in den Figuren 6 bis 8 gezeigten Kupplungsvorrichtungen können in den Innenflächen 6 der Preßhülse 3 Einschnitte zur Erhöhung der Schubelastizität vorgesehen sein.

Die in Figur 9 dargestellte Kupplungsvorrichtung umfaßt keine Traghülse, sondern nur eine Preßhülse 3, die auf ein Rohrende 4 aufgeschoben ist. Die Preßhülse 3 besteht aus einem elastisch verformbaren Kunststoffmaterial und weist einen sich über den ganzen Umfang erstreckenden Hohlraum 21 auf.

Zur Fixierung des Rohrendes 4 in der Kupplungsvorrichtung wird der Hohlraum 21 mit einem unter Druck stehenden Fluid gefüllt, so daß sich das Preßelement 3 aufweitet, wodurch eine Verpressung mit dem Rohrende 4 erfolgt.

Alternativ kann der Hohlraum 21 mit einem insbesondere pulverförmigen Mittel gefüllt sein, das beispielsweise durch eine Entzündung oder eine andere Erregung in Reaktion versetzt werden kann und dabei unter Aufweitung der Preßhülse 3 expandiert.

Die Preßhülse 3 ist von einer Verstärkungshülse 20 umgeben, die aus einem sehr festen Material besteht, so daß die Aufweitung der Preßhülse 3 praktisch ausschließlich radial nach innen zum Rohrende 4 hin erfolgt.

## Patentansprüche

1. Rohranordnung mit wenigstens zwei endseitig durch eine Kupplungsvorrichtung (1) verbundenen Rohren, wobei die Kupplungsvorrichtung (1) wenigstens eine auf ein Rohrende (4, 5) aufgesteckte und mit dem Rohrende (4, 5) verpreßte Preßhülse (3) aufweist und zwischen Preßhülse (3) und Rohrende (4, 5) ein elastischer Bereich vorgesehen ist, der eine solche Elastizität besitzt und so ausgebildet ist, daß im Betrieb auftretende thermische Axial- und Radialdehnungen des Rohrendes (4, 5) durch elastische Verformung des elastischen Bereichs ohne ein Rutschen des Rohrendes (4, 5) in der Preßhülse (3) aufgenommen werden.

2. Rohranordnung nach Anspruch 1,
**dadurch gekennzeichnet, daß** die Elastizität des elastischen Bereichs in Richtung des freien Endes der Preßhülse (3) zunimmt.

3. Rohranordnung nach Anspruch 2,
**dadurch gekennzeichnet, daß** in der Innenfläche (6) des elastischen Bereichs mehrere Einschnitte (11) zur Erhöhung der Elastizität vorgesehen sind, die sich in Achsrichtung (X) der Preßhülse (3) nebeneinanderliegend in deren Umfangsrichtung erstrecken.

4. Rohranordnung nach Anspruch 3,
**dadurch gekennzeichnet, daß** die Tiefe und/oder Breite der Einschnitte (11) in Richtung des freien Endes der Preßhülse (3) zunimmt.

5. Rohranordnung nach einem der Ansprüche 1 bis 4,
**dadurch gekennzeichnet, daß** die Preßhülse (3) eine Außen hülse (7) und eine in der Außenhülse (7) gehaltene und den elastischen Bereich bildende Innenhülse (8) aufweist.

6. Rohranordnung nach Anspruch 5,
**dadurch gekennzeichnet, daß** die Innenhülse (8) aus elastisch verformbarem Kunststoff besteht.

7. Rohranordnung nach Anspruch 5 oder 6,
**dadurch gekennzeichnet, daß** Außenhülse (7) und Innenhülse (8) derart ausgebildet sind, daß die Innenhülse (8) vom freien Ende der Preßhülse (3) her in die Außenhülse (7) eingeschoben werden kann.

8. Rohranordnung nach Anspruch 7,
**dadurch gekennzeichnet, daß** Außenhülse (7) und Innenhülse (8) jeweils konisch ausgebildet sind.

9. Rohranordnung nach Anspruch 7 oder 8,
**dadurch gekennzeichnet, daß** die Innenhülse (8) unter elastischer Verformung axial in die Außenhülse (7) einpreßbar ist, um die Verpressung zwischen Preßhülse (3) und Rohrende (4, 5) zu erzeugen.

10. Rohranordnung nach Anspruch 9,
**dadurch gekennzeichnet, daß** die Innenhülse (8) durch die Vorspannung eines Federelements (15), das sich zwischen der Innenhülse (8) und einem von außen in die Außenhülse (7) eingeschraubten Halteelement (16) abstützt, in die Außenhülse (7) gedrückt wird.

11. Rohranordnung nach einem der Ansprüche 5 bis 10,
**dadurch gekennzeichnet, daß** die Innenhülse (8) von einer Mehrzahl von axial aneinander anschließenden und voneinander getrennten Innenhülsenelementen gebildet ist.

12. Rohranordnung nach Anspruch 11,
**dadurch gekennzeichnet, daß** die Innenhülsenelemente jeweils einen T- oder L-förmigen Querschnitt besitzen, so daß bei axialer Aneinanderreihung zum Rohrende offene Einschnitte gebildet werden.

13. Rohranordnung nach Anspruch 11 oder 12,
**dadurch gekennzeichnet, daß** die Innenhülsenelemente aus Metall bestehen.

14. Rohranordnung nach einem der Ansprüche 1 bis 4,
**dadurch gekennzeichnet, daß** die Preßhülse (3) einen elastisch verformbaren Kunststoffkörper mit darin eingebetteten plastisch verformbaren Fasern (9) aus Metall oder Kunststoff aufweist.

15. Rohranordnung nach einem der Ansprüche 1 bis 4,
**dadurch gekennzeichnet, daß** die Preßhülse (3) einen elastisch verformbaren Kunststoffkörper mit darin eingebetteten plastisch verformbaren Ringelementen (10) aus Metall oder Kunststoff aufweist.

16. Rohranordnung nach Anspruch 15,
**dadurch gekennzeichnet, daß** die Ringelemente (10) in die Außenfläche des Kunststoffkörpers eingebettet sind.

17. Rohranordnung einem der Ansprüche 14 bis 16,
**dadurch gekennzeichnet, daß** der Kunststoffkörper eine in Richtung freien Endes der Preßhülse (3) geringer werdende Wandstärke hat.

18. Rohranordnung nach einem der Ansprüche 1 bis 17,
**dadurch gekennzeichnet, daß** innerhalb der Preßhülse (3) eine Traghülse (2) vorgesehen ist, die mit der Preßhülse (3) eine Ringaufnahme (12) für ein Rohrende (4, 5) bildet.

19. Rohranordnung nach Anspruch 18,
**dadurch gekennzeichnet, daß** die Preßhülse (3) und die Traghülse (2) fest miteinander verbunden sind.

20. Rohranordnung nach Anspruch 19,
**dadurch gekennzeichnet, daß** Preßhülse (3) und Traghülse (2) einstückig als elastisches Kunststoffteil mit darin eingebetteten Fasern (9) oder Ringelementen (10) aus plastisch verformbarem Metall oder Kunststoff ausgebildet sind.

21. Rohranordnung nach Anspruch 20,
**dadurch gekennzeichnet, daß** die Traghülse (2) eine in Richtung ihres freien Endes geringer werdende Wandstärke aufweist.

22. Rohranordnung nach einem der Ansprüche 18 bis 21,
**dadurch gekennzeichnet, daß** in der mit einem Rohrende (4, 5) in Anlage kommenden Außenfläche (13) der Traghülse (2) mehrere Einschnitte zur Erhöhung der Elastizität vorgesehen sind, die in Achsrichtung (X) der Preßhülse (3) nebeneinanderliegend angeordnet sind und sich in deren Umfangsrichtung erstrecken und die vorzugsweise ringförmig ausgebildet sind.

23. Rohranordnung nach Anspruch 22,
**dadurch gekennzeichnet, daß** die Tiefe und/oder Breite der Einschnitte in Richtung des freien Endes der Traghülse (2) zunimmt.

24. Rohranordnung nach Anspruch 19,
**dadurch gekennzeichnet, daß** die Traghülse (2) und eine Außenhülse (7) der Preßhülse (3) an ihrem einen axialen Ende in einen Kupplungskörper (21) aus Kunststoff eingegossen sind.

25. Rohranordnung nach Anspruch 24,
**dadurch gekennzeichnet, daß** die Traghülse (2) und die Außenhülse (7) aus einem Memory-Material bestehen.

26. Rohranordnung nach Anspruch 1,
**dadurch gekennzeichnet, daß** die Preßhülse (3) in ihrer Umfangsrichtung in mehrere Hülsenelemente (17, 18) unter teilt ist, die miteinander unter elastischer Vorspannung von Federelementen (19) derart verbunden sind, daß sich die Preßhülse (3) entgegen der Vorspannung der Federelemente (19) radial aufweiten kann, und die in Axialrichtung federnd ausgebildet sind.

27. Rohranordnung nach Anspruch 26,
**dadurch gekennzeichnet, daß** die Hülsenelemente (17, 18) durch Druckfederelemente (19) elastisch zusammengedrückt werden.

28. Rohranordnung nach Anspruch 26 oder 27,
**dadurch gekennzeichnet, daß** die Hülsenelemente (17, 18) mit axialem Abstand zueinander angeordnete, in Axialrichtung elastisch streckbare und zusammendrückbare radiale Ausbaubauchungen (27) zur Herstellung einer Elastizität in Axialrichtung aufweisen.

29. Rohranordnung nach einem der Ansprüche 1 bis 4,
**dadurch gekennzeichnet, daß** die Preßhülse (3) aus einem elastisch verformbaren Material besteht und einen Hohlraum (19) aufweist, der zum Verpressen der Preßhülse (3) mit einem Rohrende (4, 5) unter Aufweitung der Preßhülse (3) mit Preßflüssigkeit befüllbar ist.

30. Rohranordnung nach einem der Ansprüche 1 bis 4,
**dadurch gekennzeichnet, daß** die Preßhülse (3) aus einem elastisch verformbaren Material besteht und einen Hohlraum (21) aufweist, der mit einem insbesondere pulverförmigen Mittel gefüllt ist, das bei einer Erregung, insbesondere durch Zündung oder Reaktion mit Wasser, unter Aufweitung der Preßhülse (3) expandierend reagiert.

31. Rohranordnung nach Anspruch 29 oder 30,
**dadurch gekennzeichnet, daß** die Preßhülse (3) von einer festen Verstärkungshülse (20) umgeben ist, so daß eine Aufweitung der Preßhülse (3) im wesentlichen radial nach innen in Richtung des Rohrendes (4, 5) erfolgt.

## Claims

1. Pipe assembly having at least two pipes joined at the ends by a coupling device (1), the coupling device (1) having at least one compression sleeve (3) which is pushed onto one pipe end (4, 5) and compressed with the pipe end (4, 5), and between the compression sleeve (3) and the pipe end (4, 5) there being provided a flexible zone which possesses such elasticity and is so configured that thermal axial and radial expansions of the pipe end (4, 5) which occur in use are absorbed by elastic deformation of the flexible zone without the pipe end (4, 5) slipping in the compression sleeve (3).

2. Pipe assembly according to claim 1,
**characterised in that** the elasticity of the flexible zone increases in the direction of the free end of the compression sleeve (3).

3. Pipe assembly according to claim 2,
**characterised in that** provided in the inner surface (6) of the flexible zone there are a plurality of incisions (11) for increasing the elasticity, and these incisions extend in the axial direction (X) of the compression sleeve (3) and alongside one another in the circumferential direction thereof.

4. Pipe assembly according to claim 3,
**characterised in that** the depth and/or width of the incisions (11) increases in the direction of the free end of the compression sleeve (3).

5. Pipe assembly according to any of claims 1 to 4,
**characterised in that** the compression sleeve (3) incorporates an outer sleeve (7) and an inner sleeve (8) which is held in the outer sleeve (7) and forms the flexible zone.

6. Pipe assembly according to claim 5,
**characterised in that** the inner sleeve (8) is made of elastically deformable plastic.

7. Pipe assembly according to claim 5 or 6,
**characterised in that** the outer sleeve (7) and the inner sleeve (8) are constructed in such a way that the inner sleeve (8) can be pushed into the outer sleeve (7) from the free end of the compression sleeve (3).

8. Pipe assembly according to claim 7,
**characterised in that** the outer sleeve (7) and the inner sleeve (8) are each conical in construction.

9. Pipe assembly according to claim 7 or 8,
**characterised in that** the inner sleeve (8) is adapted to be pressed axially into the outer sleeve (7) using elastic deformation, so as to produce the compression between the compression sleeve (3) and the pipe end (4, 5).

10. Pipe assembly according to claim 9,
**characterised in that** the inner sleeve (8) is pressed into the outer sleeve (7) by the biasing of a spring element (15) which rests between the inner sleeve (8) and a retaining element (16) which is screwed from the outside into the outer sleeve (7).

11. Pipe assembly according to any of claims 5 to 10,
**characterised in that** the inner sleeve (8) is formed by a plurality of inner sleeve elements which adjoin one another axially and are separate from one another.

12. Pipe assembly according to claim 11,
**characterised in that** the inner sleeve elements in each case possess a T-shaped or L-shaped cross-section, with the result that incisions open towards the pipe end are formed when the elements are lined up axially.

13. Pipe assembly according to claim 11 or 12,
**characterised in that** the inner sleeve elements are made of metal.

14. Pipe assembly according to any of claims 1 to 4,
**characterised in that** the compression sleeve (3) incorporates an elastically deformable plastics body with plastically deformable fibres (9) of metal or plastic embedded therein.

15. Pipe assembly according to any of claims 1 to 4,
**characterised in that** the compression sleeve (3) incorporates an elastically deformable plastics body with plastically deformable annular elements (10) made of metal or plastic embedded therein.

16. Pipe assembly according to claim 15,
**characterised in that** the annular elements (10) are embedded in the outer surface of the plastics body.

17. Pipe assembly according to any of claims 14 to 16,
**characterised in that** the plastics body has a material thickness which decreases in the direction of the free end of the compression sleeve (3).

18. Pipe assembly according to any of claims 1 to 17,
**characterised in that** provided inside the compression sleeve (3) is a carrying sleeve (2) which with the compression sleeve (3) forms an annular locator (12) for a pipe end (4, 5).

19. Pipe assembly according to claim 18,
**characterised in that** the compression sleeve (3) and the carrying sleeve (2) are permanently joined together.

20. Pipe assembly according to claim 19,
**characterised in that** the compression sleeve (3) and the carrying sleeve (2) are constructed in one piece as a flexible plastics part having fibres (9) or annular elements (10) made of plastically deformable metal or plastic embedded therein.

21. Pipe assembly according to claim 20,
**characterised in that** the thickness of the material in the carrying sleeve (2) decreases in the direction of its free end.

22. Pipe assembly according to any of claims 18 to 21,
**characterised in that** in the outer surface (13) of the carrying sleeve (2), which outer surface (13) comes up against a pipe end (4, 5), for increasing the elasticity there are provided a plurality of incisions which are disposed alongside one another in the axial direction (X) of the compression sleeve (3) and extend in the circumferential direction thereof and which are preferably annular in shape.

23. Pipe assembly according to claim 22,
**characterised in that** the depth and/or width of the incisions increases in the direction of the free end of the carrying sleeve (2).

24. Pipe assembly according to claim 19,
**characterised in that** at one axial end thereof the carrying sleeve (2) and an outer sleeve (7) of the compression sleeve (3) are gated into a coupling body (21) made of plastic.

25. Pipe assembly according to claim 24,
**characterised in that** the carrying sleeve (2) and the outer sleeve (7) are made from a memory material.

26. Pipe assembly according to claim 1,
**characterised in that** in its circumferential direction the compression sleeve (3) is divided into a plurality of sleeve elements (17, 18) which, using flexible biasing of spring elements (19), are joined to one another in such a way that the compression sleeve (3) is able to expand radially against the biasing of the spring elements (19), and which are of resilient construction in the axial direction.

27. Pipe assembly according to claim 26,
**characterised in that** the sleeve elements (17, 18) are pressed elastically together by pressure spring elements (19).

28. Pipe assembly according to claim 26 or 27,
**characterised in that** the sleeve elements (17, 18) incorporate radial outwardly bulging areas (27) which are spaced axially apart from one another and are adapted to be elastically expandable and compressible in the axial direction so as to produce elasticity in the axial direction.

29. Pipe assembly according to any of claims 1 to 4,
**characterised in that** the compression sleeve (3) is made of an elastically deformable material and incorporates a cavity (19) which for compressing the compression sleeve (3) with a pipe end (4, 5) can be filled with pressure fluid accompanied by expansion of the compression sleeve (3).

30. Pipe assembly according to any of claims 1 to 4,
**characterised in that** the compression sleeve (3) is made of an elastically deformable material and incorporates a cavity (21) which is filled with a medium, in particular a powdery medium, which reacts by expanding upon being excited, in particular by ignition or reaction with water, accompanied by expansion of the compression sleeve (3).

31. Pipe assembly according to claim 29 or 30,
**characterised in that** the compression sleeve (3) is surrounded by a solid reinforcement sleeve (20), with the result that expansion of the compression sleeve (3) takes place substantially radially inwardly in the direction of the pipe end (4, 5).

## Revendications

1. Raccord de tuyaux comprenant au moins deux tuyaux assemblés par leurs extrémités à l'aide d'un dispositif d'accouplement (1), le dispositif d'accouplement (1) présentant au moins un manchon de compression (3) enfoncé sur une extrémité de tuyau (4, 5) et comprimé sur l'extrémité de tuyau (4, 5) et une zone élastique étant prévue entre le manchon de compression (3) et l'extrémité du tuyau (4, 5), qui possède une élasticité telle et est réalisée de telle manière que les allongements axiaux et radiaux dus à la chaleur de l'extrémité du tuyau (4, 5), qui se produisent pendant le fonctionnement, sont absorbés par déformation élastique de la zone élastique sans que l'extrémité du tuyau (4, 5) ne glisse dans le manchon de compression (3).

2. Raccord de tuyaux selon la revendication 1, **caractérisé en ce que** l'élasticité de la zone élastique augmente en direction de l'extrémité libre du manchon de compression (3).

3. Raccord de tuyaux selon la revendication 2, **caractérisé en ce que** plusieurs entailles (11) pour augmenter l'élasticité sont prévues dans la surface intérieure (6) de la zone élastique, qui sont disposées côte à côte dans la direction de l'axe (X) du manchon de compression (3) en s'étendant dans la direction du pourtour de ce dernier.

4. Raccord de tuyaux selon la revendication 3, **caractérisé en ce que** la profondeur et/ou la largeur des entailles (11) augmente vers l'extrémité libre du manchon de compression (3).

5. Raccord de tuyaux selon l'une des revendications 1 à 4, **caractérisé en ce que** le manchon de compression (3) présente une douille extérieure (7) et une douille intérieure (8) fixée dans la douille extérieure (7) et formant la zone élastique.

6. Raccord de tuyaux selon la revendication 5, **caractérisé en ce que** la douille intérieure (8) est composée de matière plastique déformable élastiquement.

7. Raccord de tuyaux selon la revendication 5 ou 6, **caractérisé en ce que** la douille extérieure (7) et la douille intérieure (8) sont réalisées de manière à ce que la douille intérieure (8) puisse être insérée dans la douille extérieure (7) par l'extrémité libre du manchon de compression (3).

8. Raccord de tuyaux selon la revendication 7, **caractérisé en ce que** la douille extérieure (7) et la douille intérieure (8) sont chacune réalisées de façon conique.

9. Raccord de tuyaux selon la revendication 7 ou 8, **caractérisé en ce que** la douille intérieure (8) peut être enfoncée axialement dans la douille extérieure (7) en la déformant de façon élastique afin de créer la compression entre le manchon de compression (3) et l'extrémité du tuyau (4, 5).

10. Raccord de tuyaux selon la revendication 9, **caractérisé en ce que** la douille intérieure (8) est enfoncée dans la douille extérieure (7) du fait de la précontrainte d'un élément à ressort (15) qui prend appui entre la douille intérieure (8) et un élément de fixation (16) vissé de l'extérieur dans la douille extérieure (7).

11. Raccord de tuyaux selon l'une des revendications 5 à 10, **caractérisé en ce que** la douille intérieure (8) est formée par une multitude d'éléments de douille intérieure séparés les uns des autres et faisant suite les uns aux autres dans la direction axiale.

12. Raccord de tuyaux selon la revendication 11, **caractérisé en ce que** les éléments de douille intérieure possèdent chacun une section transversale en T ou en L, si bien qu'en les disposant en rang côte à côte dans la direction de l'axe, ils forment des entailles ouvertes en direction de l'extrémité du tuyau.

13. Raccord de tuyaux selon la revendication 11 ou 12, **caractérisé en ce que** les éléments de douille intérieure sont en métal.

14. Raccord de tuyaux selon l'une des revendications 1 à 4, **caractérisé en ce que** le manchon de compression (3) présente un corps en matière plastique déformable de façon élastique, dans lequel sont enrobées des fibres (9) en métal ou en matière plastique déformables de façon plastique.

15. Raccord de tuyaux selon l'une des revendications 1 à 4, **caractérisé en ce que** le manchon de compression (3) présente un corps en matière plastique déformable de façon élastique, dans lequel sont noyés des éléments annulaires (10) en métal ou en matière plastique déformables de façon plastique.

16. Raccord de tuyaux selon la revendication 15, **caractérisé en ce que** les éléments annulaires (10) sont noyés dans la surface extérieure du corps en matière plastique.

17. Raccord de tuyaux selon l'une des revendications 14 à 16, **caractérisé en ce que** le corps en matière plastique possède une épaisseur de paroi allant en diminuant vers l'extrémité libre du manchon de compression (3).

18. Raccord de tuyaux selon l'une des revendications 1 à 17, **caractérisé en ce qu'**à l'intérieur du manchon de compression (3) est prévu un manchon de support (2) qui constitue avec le manchon de compression (3) un logement annulaire (12) pour une extrémité de tuyau (4, 5).

19. Raccord de tuyaux selon la revendication 18, **caractérisé en ce que** le manchon de compression (3) et le manchon de support (2) sont reliés fixement entre eux.

20. Raccord de tuyaux selon la revendication 19, **caractérisé en ce que** le manchon de compression (3) et le manchon de support (2) sont réalisés d'un seul tenant en tant que pièce en matière plastique élastique dans laquelle sont enrobés des fibres (9) ou des éléments annulaires (10) en métal ou en matière plastique déformables de façon plastique.

21. Raccord de tuyaux selon la revendication 20, **caractérisé en ce que** le manchon de support (2) présente une épaisseur de paroi allant en diminuant vers son extrémité libre.

22. Raccord de tuyaux selon l'une des revendications 18 à 21, **caractérisé en ce que** dans la surface extérieure (13) du manchon de support (2) qui entre en contact avec une extrémité de tuyau (4, 5) sont prévues plusieurs entailles pour augmenter l'élasticité, qui sont disposées côte à côte dans la direction de l'axe (X) du manchon de compression (3) en s'étendant dans la direction du pourtour de ce dernier et qui sont de préférence réalisées de façon annulaire.

23. Raccord de tuyaux selon la revendication 22, **caractérisé en ce que** la profondeur et/ou la largeur des entailles augmente en direction de l'extrémité libre du manchon de support (2).

24. Raccord de tuyaux selon la revendication 19, **caractérisé en ce que** le manchon de support (2) et une douille extérieure (7) du manchon de compression (3) sont coulés à l'une de leurs extrémités axiales dans un élément d'accouplement (21) en matière plastique.

25. Raccord de tuyaux selon la revendication 24, **caractérisé en ce que** le manchon de support (2) et la douille extérieure (7) sont composés d'une matière à mémoire de forme.

26. Raccord de tuyaux selon la revendication 1, **caractérisé en ce que** le manchon de compression (3) est subdivisé dans la direction de son pourtour en plusieurs éléments de manchon (17, 18) qui sont reliés entre eux avec une précontrainte élastique par des éléments à ressort (19) de manière à ce que le manchon de compression (3) puisse s'élargir radialement à l'encontre de la précontrainte des éléments à ressort (19), et qui sont réalisés de manière à faire ressort dans la direction axiale.

27. Raccord de tuyaux selon la revendication 26, **caractérisé en ce que** les éléments de manchon (17, 18) sont comprimés élastiquement par des éléments de compression à ressort (19).

28. Raccord de tuyaux selon la revendication 26 ou 27, **caractérisé en ce que**, pour créer une élasticité dans la direction axiale, les éléments de manchon (17, 18) présentent des convexités (27) radiales disposées avec un écart axial réciproque, qui peuvent s'allonger et être comprimées de façon élastique dans la direction axiale.

29. Raccord de tuyaux selon l'une des revendications 1 à 4, **caractérisé en ce que** le manchon de compression (3) est composé d'une matière déformable élastiquement et présente une cavité (21) qui, pour comprimer le manchon de compression (3) sur une extrémité de tuyau (4, 5) en élargissant le manchon de compression (3), peut être remplie de liquide de compression.

30. Raccord de tuyaux selon l'une des revendications 1 à 4, **caractérisé en ce que** le manchon de compression (3) est composé d'une matière déformable élastiquement et présente une cavité (21) qui est notamment remplie d'une matière pulvérulente qui, notamment lorsqu'elle est amorcée ou mise en contact avec de l'eau, réagit par expansion et élargit ce faisant le manchon de compression (3).

31. Raccord de tuyaux selon la revendication 29 ou 30, **caractérisé en ce que** le manchon de compression (3) est entouré par une douille de renforcement (20) statique, si bien que le manchon de compression (3) s'élargit essentiellement radialement vers l'intérieur en direction de l'extrémité du tuyau (4, 5).
